Europäisches Patentamt

European Patent Office

Office européen des brevets

(11) Veröffentlichungsnummer : **0 042 067**
**B1**

(19)

(12) EUROPÄISCHE PATENTSCHRIFT

(45) Veröffentlichungstag der Patentschrift :
20.02.85

(51) Int. Cl.⁴ : **B 63 B 15/00**, F 16 F 15/04//
B63B29/02

(21) Anmeldenummer : 81103741.5

(22) Anmeldetag : 15.05.81

(54) Elastische Befestigung von Aufbauten, wie Deckshäusern u. dgl. an Bord von Schiffen.

(30) Priorität : 16.06.80 DE 3022509

(43) Veröffentlichungstag der Anmeldung :
23.12.81 Patentblatt 81/51

(45) Bekanntmachung des Hinweises auf die Patenterteilung : 20.02.85 Patentblatt 85/08

(84) Benannte Vertragsstaaten :
AT BE CH FR LI NL

(56) Entgegenhaltungen :
FR-A- 2 292 897
US-A- 3 282 542
US-A- 3 389 673
US-A- 3 836 134

(73) Patentinhaber : G + H MONTAGE GmbH
Westendstrasse 17
D-6700 Ludwigshafen (DE)

(72) Erfinder : Kundt, Karl-Wilhelm
Traberweg 40
D-2000 Hamburg 72 (DE)

(74) Vertreter : Betzler, Eduard, Dipl.-Phys. et al
P.O.Box 700209 Plinganserstrasse 18a
D-8000 München 70 (DE)

## Beschreibung

Die Erfindung betrifft eine elastische Befestigung von Aufbauten, wie Deckshäusern u. dgl., auf einem Schiffsdeck, die in einem zwischen Aufbau und Schiffsdeck befindlichen und gegebenenfalls durch eine Blende abgedeckten Zwischenraum angeordnet ist, federnde Isolatoren enthält und mit dem Boden des Aufbaus einerseits und mit dem Schiffsdeck andererseits fest verbunden ist.

An Deck von Schiffen angebrachte Aufbauten, wie insbesondere Deckshäuser, liegen im Nahbereich des Maschinenraumes. Bei nicht hinreichender Isolierung wird vom Schiffskörper Schallenergie auf die Aufbauten übertragen. Diese liegen meist auch im Bereich einer erhöhten Luftschallabstrahlung. Der daraus resultierende starke Lärmanstieg im Wohn- und Navigationsbereich wird als störend empfunden, und es sind bereits verschiedene Maßnahmen bekannt, die unerwünschten Schalleinwirkungen mehr oder weniger zu beseitigen.

Es ist bekannt, Haupt- und Hilfsmaschinen sowie Pumpen und Verdichter jeweilseinzeln elastisch zu lagern, wodurch die Weiterleitung des Körperschalls über die Fundamente in den Schiffskörper vermindert wird.

Aus « Hansa », 1967, Nr. 7, Seite 588 bis 592, Aufsatz : « Lärmbekämpfungsmaßnahmen auf Rheinhotelschiffen und Schubschiffen. » ist ein elastisch gelagertes Deckshaus gemäß dem Oberbegriff des Anspruchs bekannt geworden, bei dem die elastische Lagerung durch Federisolatoren mit zusätzlicher Dämpfung bewirkt werden soll.

Da man der Meinung war, daß die bekannte Konstruktion zwar bei verhältnismäßig geringen mechanischen Belastungen eine Schwingungsisolierung bietet, aber die einzeln angebrachten Federisolatoren nicht in vollem Umfange die gewünschten Ergebnisse zeigten, ist man nach der DE-AS 19 52 611 dazu übergegangen, die elastische Befestigung in Form von auf dem Schiffsdeck befestigten, längsschiffverlaufenden Schienen herzustellen, deren Profil sich nach oben verjüngt, die von am Boden des Deckshauses befestigten und sich über die Länge des Deckshauses erstreckenden, nach oben offenen Schienen übergriffen werden, wobei Zwischen den beiden Schienen elastische, an der offenen Schiene befestigte Lagerelemente angeordnet und am Deck und am Boden des deckshauses angreifende Sicherungselemente vorgesehen sind.

Damit hoffte man, eine elastische Befestigung von Aufbauten auf Schiffen zur Vermeidung von Schallübertragung zu verwirklichen, die zusätzliche Isoliermaßnahmen überflüssig macht und die bei Krängung eines Schiffes eine einwandfreie Kraftübertragung gewährleistet.

Bei dieser elastischen Befestigung von Aufbauten müssen jedoch am Deck und am Boden des Deckshauses angreifende besondere Sicherungselemente vorgesehen werden.

Es hat sich nun gezeigt, daß es durchaus möglich ist, die bei Seeschiffen auftretende Krängung eines Schiffes und die damit wirkende seitliche Belastung auf die elastische Befestigung auch ohne eine Schienenanordnung mit am Boden des Deckshauses und am Deck angreifenden Sicherungselementen zu bewältigen.

Es ist deshalb Aufgabe der Erfindung, eine elastische Befestigung von Aufbauten, wie Deckshäusern u. dgl., auf einem Schiffsdeck zu schaffen, die aus einzelnen Isolatoren besteht, und für die keine zusätzlichen Sicherungselemente vorgesehen werden müssen, die am Deck und am Boden des Deckshauses angreifen, wobei die Anordnung so getroffen ist, daß allein durch Einflußnahme auf die einzelnen Isolatoren der entsprechende Aufbau ausgerichtet und nachgestellt werden kann.

Die der Erfindung zugrunde liegende Aufgabe wird dadurch gelöst. Daß die Isolatoren pneumatische Luftfederelemente sind, die jeweils einen Druckbehälter aufweisen, der aus mit Stahlringen verstärkten Elastomermaterial besteht, daß der Druckbehälter jedes Luftfederelementes über ein automatisches Rückschlagventil an die Schiffsluft angeschlossen ist, und daß die Luftfederelemente einzeln nachstellbar und justierbar sind.

Solche pneumatische Luftfederelemente sind an sich bekannt. Beispielsweise sind solche Luftfederelemente in einem Prospekt der Firma EFF-BE-Werk, Fritz Brumme GmbH & Co. KG, 6096 Raunheim, Ausgabe SI 30-76 beschrieben. Auch in der US-A 3 836 134 sind solche Luftfederelemente offenbart. Als Anwendungsbeispiel für solche Luftfederelemente sind dabei genannt die Lagerung von Vibratoren, Förderanlagen, Vakuumpumpen, Kompressoren, Generatoren, Kältemaschinen, Klimageräten, Dieselmotoren, Ventilatoren, schnellaufenden Pressen, Fallhämmern, Geräten, Instrumenten etc., d. h. immer von Elementen, die Selbst Schwingungen erzeugen und gegen ein Fundament isoliert werden sollen.

Im grundsätzlichen Gegensatz dazu erfolgt die Verwendung solcher Luftfederelemente beim Erfindungsgegenstand im umgekehrten Sinne. Hier vibriert das Fundament in Form des Schiffskörpers, während das Deckshaus der zu isolierende Bauteil ist, der entsprechend gelagert werden soll. Es war somit nicht ohne weiteres vorauszusehen, daß sich die an sich brauchbare Lösung des Problems der elastischen Befestigung von Aufbauten, wie Deckshäusern u. dgl. am Bord von Schiffen, wie sie sich aus der DE-AS 19 52 611 ergibt, noch verbessern läßt, in dem man von dieser Lösung zurückgeht auf die Lösung der Einzellagerung durch entsprechende Federelemente, die jedoch gemäß der Erfindung eine besondere Ausführungsform aufweisen.

Die Zeichnung zeigt in

Figur 1 eine schematische Draufsicht auf den Bereich eines Schiffsdecks, auf dem entsprechende Luftfederelemente angeordnet sind, die zur elastischen Befestigung beispielsweise eines Deckhauses dienen ;

Figur 2 einen Längsschnitt durch Schiffsdeck und einem Teil eines über ein Luftfederelement gelagerten Deckshauses ;

Figur 3 eine Einzeldraufsicht auf ein Luftfederelement ;

Figur 4 eine teilweise im Schnitt gezeichnete Seitenansicht eines Luftfederelementes ;

Figur 5 eine Ansicht einer Kontrollschalttafel für eine elastische Deckshauslagerung auf einem Binnenschiff ;

Figur 6 den Anschluß der elastischen Lagerung.

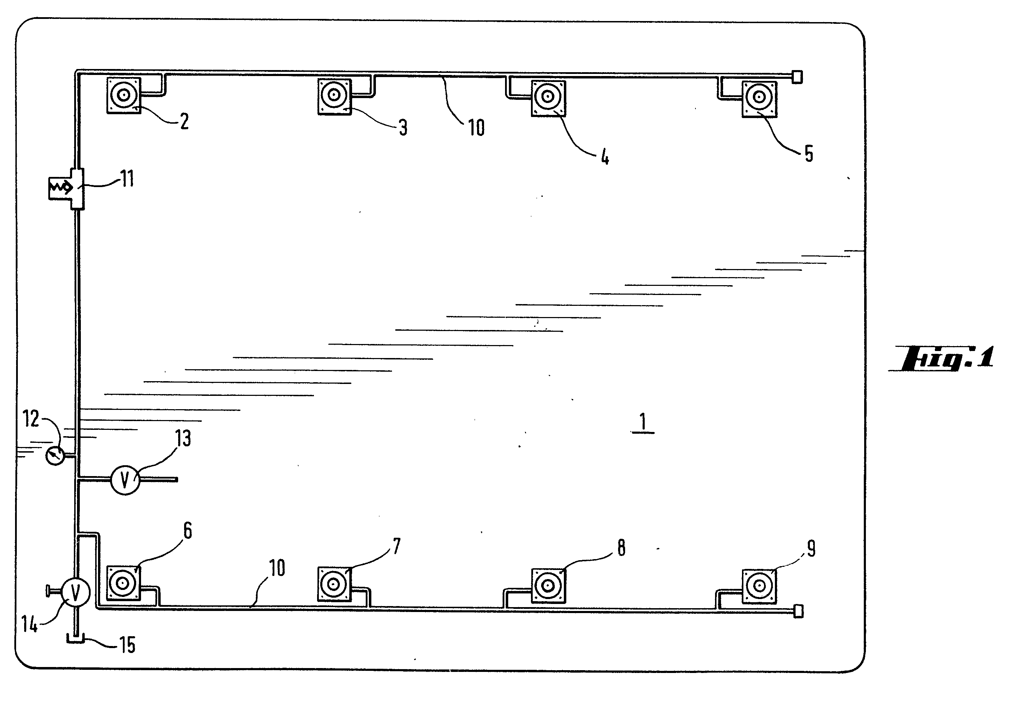

In Fig. 1 ist mit 1 der Bereich bezeichnet, auf dem beispielsweise ein Deckshaus gelagert werden soll. Auf diesem Bereich sitzen beim wiedergegebenen Ausführungsbeispiel die Luftfederelemente 2 bis 9, die über Zweiwegeluftleitungen 10, ein Sicherheitsventil 11, ein Manometer 12, einen Entlüftungshahn 13, ein Absperrelement 14 mit dem Anschluß für die Schiffsluft verbunden sind, welcher schematisch bei 15 angedeutet ist.

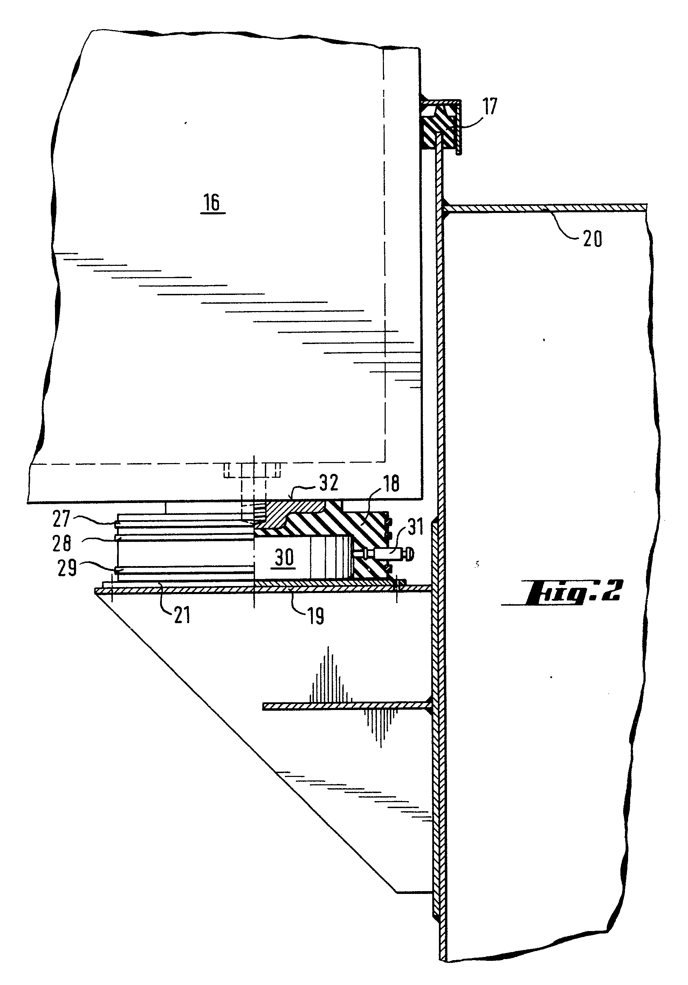

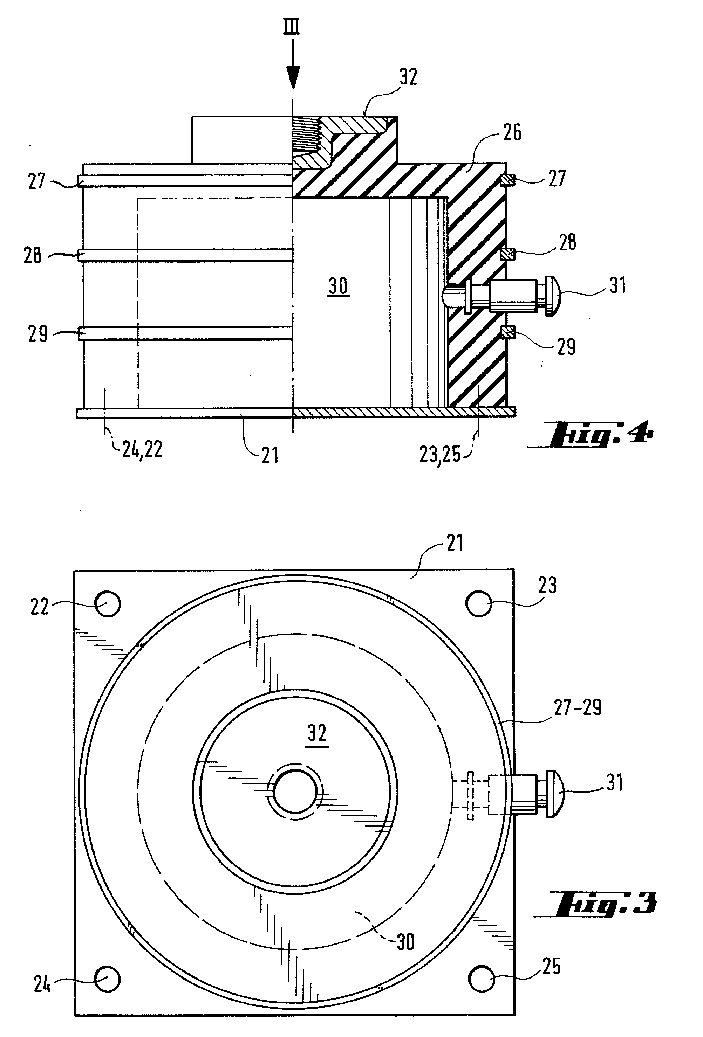

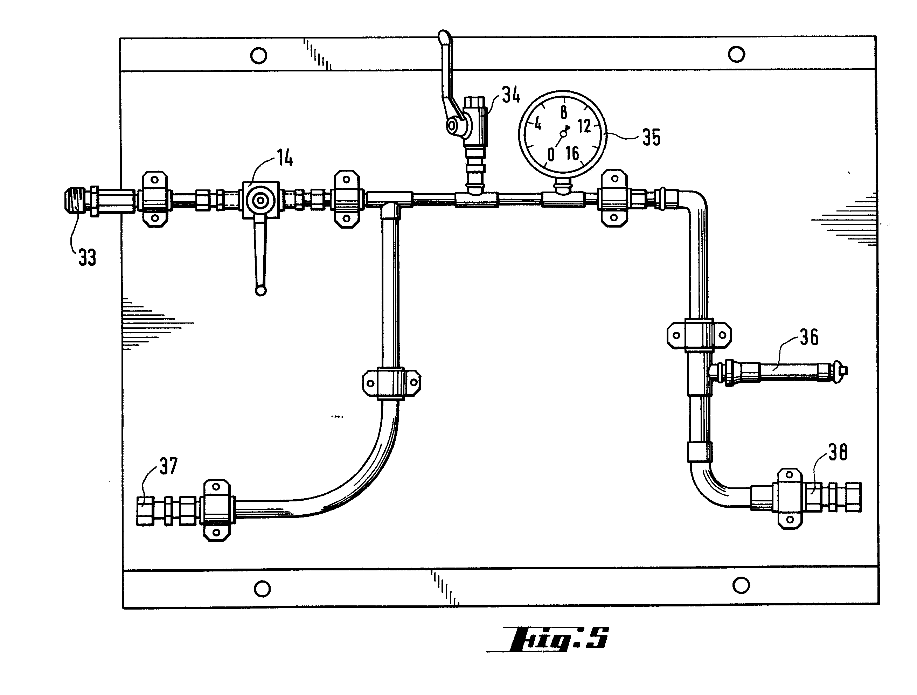

In Fig. 2 ist mit 16 ein Teil eines Deckshauses wiedergegeben, das über ein umlaufendes Gummiklemmprofil 17 und Luftfederelemente 18 auf einer Konsole 19 gelagert ist, die mit dem Deck 20 in fester Verbindung steht. In Fig. 3 ist das Luftfederelement in Draufsicht dargestellt. Es enthält eine Grundplatte 21 mit Schraublöchern 22, 23, 24 und 25, über die Grundplatte auf der Konsole 19 festgeschraubt werden kann. Wie man aus Fig. 4 erkennt, besteht das Luftfederelement aus einem elastomeren Körper 26, der von Stahlreifen 27, 28 und 29 umgeben ist. Das hohle Innere 30 dieses Luftfederelementes kann über ein Rückschlagventil 31 unter Druck gesetzt werden, so daß es sich in die gewünschte Höhe streckt, trotzdem auf der oberen Abschlußfläche 32 die Last beispielsweise des Deckshauses 16 ruht.

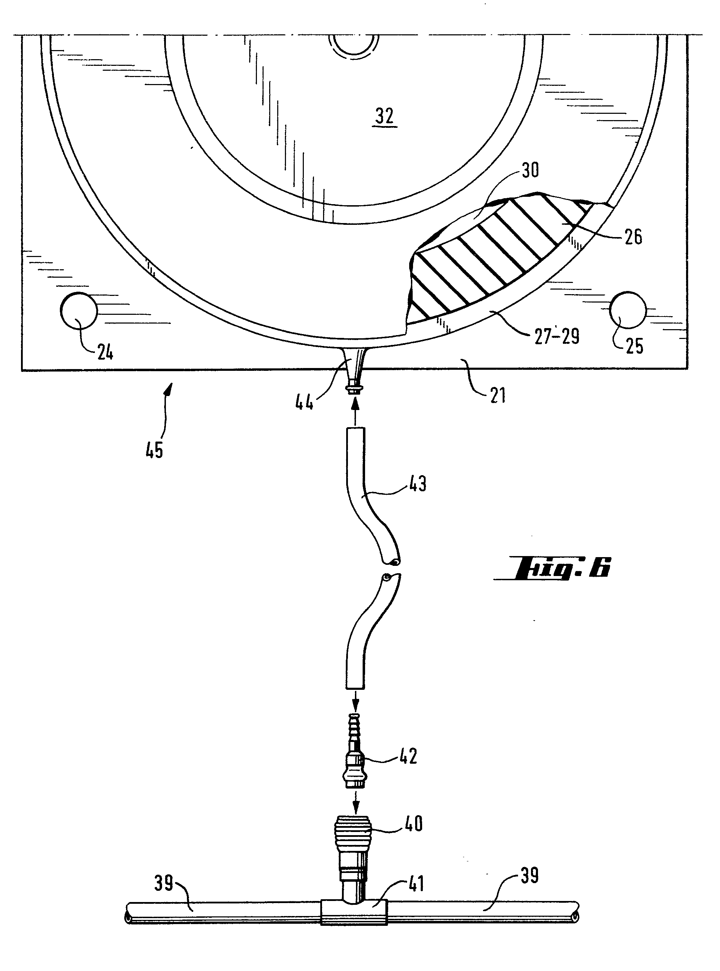

In Fig. 5 erkennt man bei 33 den Anschluß an die Schiffsluft. Dieser Anschluß entspricht dem Anschluß 15 in Fig. 1. Bei 34 ist der Entlüftungshahn angedeutet, der dem Entlüftungshahn 13 nach Fig. 1 entspricht. Bei 35 ist das Manometer angedeutet, das dem Manometer 12 nach Fig. 1 entspricht. 36 ist das in Fig. 1 schematisch angedeutete Entsicherheitsventil 11. Bei 37 und 38 erfolgt der Anschluß an jeweils eines der Luftfederelemente 2 bis 9. Man erkennt, daß sich die gesamte Deckshauslagerung gemäß der Erfindung von einer oder mehreren Kontrollschalttafeln aus kontrollieren läßt. Es ist möglich, die einzelnen Luftfederelemente individuell an solche Kontrolltafeln anzuschließen, wodurch man die Möglichkeit erhält, die Luftfederelemente einzeln nachstellbar und justierbar zu machen.

Der Anschluß der Luftfederelemente an die Leitungen ergibt sich aus Fig. 6. Man erkennt die Luftleitung 39, die der Luftleitung 10 entspricht. Bei 40 ist eine Einhandkupplung vorgesehen, die auf dem T-Stück 41 sitzt, das mit der Luftleitung 39 in Verbindung steht. Mit 42 ist ein Stecknippel bezeichnet, der in die Schlauchleitung 43 einsteckbar ist, die über ein automatisches Luftventil 44 in das Innere des schematisch angedeuteten Luftfederelementes 45 dieses mit Luft versorgt und diese auch hält.

**Anspruch**

Elastische Befestigung von Aufbauten, wie Deckshäusern (16) u. dgl., auf einem Schiffsdeck (20), die in einem zwischen Aufbau und Schiffsdeck befindlichen und gegebenenfalls durch eine Blende abgedeckten Zwischenraum angeordnet ist, federnde Isolatoren enthält und mit dem Boden des Aufbaus einerseits und mit dem Schiffsdeck andererseits fest verbunden ist, dadurch gekennzeichnet, daß die Isolatoren pneumatische Luftfederelemente (2, 9) sind, die jeweils einen Druckbehälter (21, 26) aufweisen, der aus mit Stahlringen verstärktem Elastomermaterial gesteht, daß der Druckbehälter jedes Luftfederelementes über ein automatisches Rückschlagventil (31) an die Schiffsluft angeschlossen ist, und daß die Luftfederelemente einzeln nachstellbar und justierbar sind.

**Claim**

Elastic attachment of superstructures such as deckhouses (16), etc., to a deck (20), the attachment being disposed in a space located between the superstructure and the deck and possibly covered by a panel, and further containing resilient insulators and being firmly connected with the floor of the superstructure, on the one hand, and the deck, on the other hand, characterized in that the insulators are pneumatic spring elements (2-9) each having a pressure tank (21, 26) made of elastomer material reinforced by steel rings, that the pressure tank of each pneumatic spring element is attached to the ship's air via an automatic check valve (31), and that the pneumatic spring elements are capable of being individually regulated and adjusted.

**Revendication**

Attache élastique fixant des châteaux, par exemple des roufs (16) etc., sur un deck de navire (20), montée dans un espacement — éventuellement recouvert d'un parement — entre château et deck, contenant des isolateurs élastiques et étant raccordée par assemblage fixe au fond du château, d'une part, et au deck du navire, d'autre part, caractérisée en ce que les isolateurs sont des éléments élastiques à air (2-9) présentant respectivement un réservoir sous pression (21, 26) en matière élastomère renforcée d'anneaux d'acier, que les réservoirs sous pression de tous les éléments élastiques à air sont raccordés au compresseur d'air du navire, à l'intermédiaire de soupapes de retenue automatiques, et que les éléments élastiques à air sont réglables et ajustables individuellement.

Fig.1

Fig. 2

Fig. 4

Fig. 3

Fig.5

32

30

26

27-29

25

24

21

44

45

43

*Fig. 6*

42

40

39

41

39